# EUROPEAN PATENT SPECIFICATION

(11) **EP 2 341 098 B1**
(45) Date of publication and mention of the grant of the patent: **04.09.2013**
(21) Application number: 10196530.9
(22) Date of filing: 22.12.2010
(51) Int. Cl.: C08K 5/521, C08K 5/524, C08L 69/00

(54) **Polycarbonate resin composition**
Polycarbonat Zusammensetzung
Composition de polycarbonate

(30) Priority: 31.12.2009 KR 20090135291
(43) Date of publication of application: 06.07.2011
(73) Proprietor: Cheil Industries Inc., Uiwang-si, Gyeonggi-do (KR)
(72) Inventor: Lee, Seon Ae, Gyeonggi-do (KR); Bae, Im Hyuck, Gyeonggi-do (KR); Joo, Beom Jun, Gyeonggi-do (KR)
(74) Representative: Bublak, Wolfgang

(56) References cited:
- US-A- 4 178 281

## Description

The present invention relates to a polycarbonate resin composition having good flame retardancy. More especially, the present invention relates to a thermal plastic resin composition having excellentheat resistance as well as good flame retardancy as applying a flame retardant which is prepared by blendinga base resin including a polycarbonate resin and rubber-modified aromatic vinyl resin with two kinds of phosphorous compound.

Recently, plastic polymers and synthetic resins are used in various fields such as vehicles, building materials, aircrafts, railroads, home appliances, etc. Further, the applications thereof are explosively increasing as the development of various functional additives are being rapidly conducted.However, plastic itself can bum easily and does not have fire resistance.Therefore, plastic may be easily combusted by an exterior igniting source and may cause the fire to spread. Accordingly countries such as the United States, Japan and many European countries have passed laws requiring polymer resins to satisfy flame resistance standards to guarantee stability about a fire.

As for flame retardant methods for polymers, there are a method of synthesizing a thermally stable resin through designing the molecule structure, a method of chemically improving a conventional polymer (reaction type), a method of physically adding by blending a flame retardant agent or compoundingthereof (additive type) and a method of coating or painting a flame retardant agent. The most widely used and well known flame retardant method is adding a flame retardant agent to a polymer resin. The additive type flame retardant agent is classified by its components as halogen-containing, phosphorus-containing, nitrogen-containing, silicon-containing, inorganic-containing flame retardant agents.

Halogen-containing flame retardant agents restrain chain reactions through a reaction with radicals that are generated in the gas during the combustion of polymers within a resin.Examples of halogen-containing compounds used to impart flame retardancy include polybromodiphenyl ether, tetrabromobisphenol-A, epoxy compounds substituted with bromine, chlorinated polyethyleneand the like. Antimony trioxide or antimony pentaoxide is commonly used as an antimony-containing compound. Particularly, bromine flame retardant agent, which is widely used as a halogen-containing flame retardant because of having matchless physical property, reasonable price and excellent flame retardancy in electric field, may be harmful to human and the environment.Due to the above, RoHS(Restriction of Hazardous Substances Directive) was ratified in July 2006. Accordingly, a universal bromine-containing flame retardant agent as known as DECA is partially being suspended from use, and the amount of the agent used is strikingly decreasing.

However, as concerns about the environmental issue increase, there is a trend to restrain the use of the halogen based flame retardant agent. Therefore, the phosphorous flame retardant agent, which is free of any halogen compound, is preferred to the flame retardant agent. Such a phosphorous flame retardant agent has excellent flame retardancy on solid phase reaction, particularly on plastic containing a lot of oxygen.The phosphorous flame retardant agent classifies phosphate, phosphineoxide, phosphate, phosphonate and the like. Further, the phosphorous flame retardant agent attains flame retardancy using char former such as polycarbonate resin or polyphenylene ether resin.The phosphorous compound usually uses aromatic phosphorous ester such as triphenylphosphate, resorcinol bisphenol phosphate.

U.S. Pat. No.4,692,488 discloses a thermoplastic resin composition comprising non-halogen aromatic polycarbonate resin, non-halogen styrene-acrylonitrile copolymer, non-halogen phosphorous compound, tetrafluoroethylene copolymer and small amount of ABS copolymer.U.S. Pat. No. 5,061,745 discloses a flame retardant resin composition comprising aromatic polycarbonate resin, ABS graft copolymer, styrenic copolymer, phosphorous ester and tetrafluoroethylene copolymer. However, the disadvantages could be observed that more than certain amount of phosphorous ester must be added in order to have an effect of flame retardancy.

The present inventors have developed anenvironment-friendly flame retardant polycarbonate resin composition that comprises a phosphorous compound using a combination of phosphate and phosphonate as a flame retardant and base resin including a polycarbonate resin and a rubber-modified aromatic vinyl resin, which has a excellent flame retardancy and heat resistance.

The object of the invention is to provide a polycarbonate resin composition having good flame retardancy.

Another object of the invention is to providea polycarbonate resin composition having excellent heat resistance as well as good flame retardancy.

Another object of the invention is to provide eco-friendly flame retardant polycarbonateresin composition.

Another object of the invention is to provide flame retardant polycarbonate resin composition making a molded product of electric material because of having excellent flame retardancy.

In order to resolve the above technical problem, a polycarbonate resin composition according to the present invention provides a polycarbonate resin composition having excellent flame retardancy which includes (A) about 30 to about 99 % by weight of a polycarbonate resin; (B) about 1 to about 70 % by weight of a rubber-modified aromatic vinyl resin; and (C) about 0.1 to about 40 parts by weight of a phosphorous compound including (C1) a phosphate compound represented by the formula 2 and (C2) a phosphonate compound represented by formula 3, per 100 parts by weight of a base resin including (A) and (B).

It is a feature of an embodiment of the invention to provide the said phosphorous compound (C) including (C1) about 20 to about 80 % by weight of a phosphate compound and (C2) about 20 to about 80 % by weight of a phosphonate compound.

It is another feature of an embodiment of the present invention to provide the said resin composition which may further include one or more selected from the group consisting of a flame retardant, a flame retarding aid, a plasticizer, heat stabilizer, an anti-dripping agent, antioxidant, light stabilizer, dye, pigment, inorganic filler, or a combination thereof

In order to resolve another technical problem, the present invention provides processed goods prepared by using the above resin composition.

The present invention will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

A polycarbonate resin composition according to the present invention includes(A) about 30 to about 99 % by weight of a polycarbonate resin; (B) about 1 to about 70 % by weight of a rubber-modified aromatic vinyl resin; and (C) about 0.1 to about 40 parts by weight of a phosphorous compound including (C1) a phosphate compound and (C2) a phosphonate compound, per 100 parts by weight of a base resin including (A) and (B).

### (A) Polycarbonate resin

A polycarbonate resin of the present invention may be prepared by reacting a diphenol represented by Chemical Formula 1 with a phosgene, halogen formate or a carbonic diester. 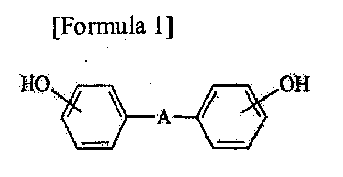 (wherein A is a single bond, a C ₁₋₅ alkylene group, a C ₁₋₅ alkylidene group, a C ₅₋₆ cycloalkylidene group, -S- or -SO₂-.)

Examples of diphenols of Chemical Formula 1 may include without limitation hydroquinol, resocinol, 4,4'-dihydroxy diphenyl, 2,2-bis-(4-hydroxyphenyl)-propane, 2,4-bis-(4-hydroxyphenyl)-2-methyl buthane, 1,1-bis-(4-hydroxyphenyl)-cyclohexane, 2,2-bis-(3-chloro-4-hyroxyphenyl)-propane, 2,2-bis-(3,5-dichloro-4-hydroxyphenyl)-propane, and the like, and mixtures thereof. From among these, 2,2-bis-(4-hydroxyphenyl)-propane, 2,2-bis-(3,5-dichloro-4-hydroxyphenyl)-propane, 1, 1 -bis-(4-hydroxyphenyl)-cyclohexaneand the like is preferable. Further, the 2,2-bis-(4-hydroxyphenyl)-propane (also referred to as bisphenol-A, BPA) is the most preferable. The polycarbonate resin according to the present invention may have a weight average molecular weight (Mw) of about 10,000 to about 200,000, for example about 15,000 to about 80,000.

In accordance with various embodiments of the invention, suitable polycarbonates incorporated into the composition of the present invention may be branched in a known manner. For example, such branched polycarbonates can be prepared by incorporating about 0.05 to about 2 mol %, based on the total quantity of diphenols used, of tri- or higher functional compounds, for example, those with three or more phenolic groups.

In exemplary embodiments, the composition of the invention can include the polycarbonate resin in an amount of about 1 to about 99% by weight, for example about 20 to about 80% by weight, based on the total weight of the base resin. Such compositions can exhibit a good balance of flame retardancy, mechanical strength and scratch-resistance.

A polycarbonate used in preparation of a polycarbonate resin composition of the present invention may include without limitation homopolycarbonate, copolycarbonate or the mixture thereof.

Further, a polycarbonate used in preparation of a polycarbonate resin composition of the present invention may substitute totally or partially ester precursor, for example aromatic polyester-carbonate resin prepared by polymerizingin presence of difunctional carboxylic acid.

In the present invention, the polycarbonate resin composition can include the polycarbonate resin (A) in an amount of about 30 to about 99 % by weight, for example about 40 to about 90 % by weight,for example about 50 to about 80 % by weight, for example about 60 to about 77 % by weight, based on the total weight of a base resin comprising (A) and (B), wherein (A) is polycarbonate resin and (B) is a rubber-modified aromatic vinyl resin. If the polycarbonate resin is used in above amount, excellent flame retardany and mechanical properties may be obtained.

### (B) Rubber Modified Aromatic Vinyl Based Copolymer Resin

The rubber modified aromatic vinyl based copolymer resin according to the present invention is a polymer resin wherein a rubbery polymer is dispersed in the form of particles in a matrix of an aromatic vinyl polymer. The rubber modified aromatic vinyl based copolymer resin can be prepared by polymerizing rubbery polymer, aromatic vinyl monomer, and optionally monomer polymerizable with the aromatic vinyl monomer. The rubber modified aromatic vinyl based copolymer resins can be prepared by known methods such as emulsion polymerization, solution polymerization, suspension polymerization, and bulk polymerization.

The rubber-modified aromatic vinyl based copolymer resin can be produced by preparing separately a graft copolymer resin typically having high rubber content and an aromatic vinyl copolymer resin which does not contain rubber and mixing them together. In bulk polymerization, the rubber modified aromatic vinyl based copolymer resin can be prepared in one process without separately preparing the graft copolymer resin and the aromatic vinyl copolymer resin. In either case, the rubber content in a final rubber modified aromatic vinyl based copolymer resin can range from about 1 to about 30% by weight, for example about 3 to about 20 % by weight, for example about 5 to about 15 % by weight, based on the total weight of a base resin. The Z-average particle size of the rubber in the rubber modified aromatic vinyl based copolymer resin can range from about 0.1 to 6.0 µm, for example about 0.25 to about 4µm.

The above resin may include without limitation acrylonitrile-butadiene-styrene copolymer resin (ABS), acrylonitrile-acryl rubber-styrene copolymer (AAS), acrylonitrile-ethylene/propylene rubber-styrene copolymer (AES), High Impact Polystyrene (HIPS)and the like. These can be used singly or as a combination of at least two or more thereof.

In the rubber modified aromatic vinyl based copolymer resin, the graft copolymer resin can be used alone or in combination with a copolymer resin which does not contain rubber, depending on the compatibility thereof.

In an embodiment of the present invention, the rubber-modified aromatic vinyl based copolymer resin comprises about 10 to about 100% by weight of a graft copolymer resin and about 0 to about 90% by weight of a copolymer resin.In another embodiment of the present invention, the rubber-modified aromatic vinyl based copolymer resin comprises about 55 to about 90% by weight of a graft copolymer resin and about 10 to about 45% by weight of a copolymer resin. In another embodiment of the present invention, the rubber-modified aromatic vinyl based copolymer resin comprises about 15 to about 50% by weight of a graft copolymer resin and about 50 to about 85% by weight of a copolymer resin.

In the present, the flame retardant polycarbonate resin composition can include the rubber-modified aromatic vinyl resin (B) in amount of about 1 to about 70 % by weight, for example about 1 to about 50 % by weight, for example about 5 to about 40 by weight, based on the total weight of a base resin comprising (A) and (B).

A graft copolymer resin (B₁) and a copolymer resin (B₂), which a rubber-modified aromatic vinyl resin (B) is comprised of, are explained concretely as follows.

### (B₁) Graft Copolymer Resin

The graft copolymer resin (B₁) of the present invention may be prepared by polymerizing a rubbery polymer with a graft-copolymerizablearomatic vinyl monomer and a monomer copolymerizable with said aromatic vinyl monomer.

Examples of the rubbery polymers may include without limitation diene rubbers such as polybutadiene, poly(styrene-butadiene), poly(acrylonitrile-butadiene), and the like; saturated rubbers in which hydrogen is added to thediene rubber; isoprene rubbers; chloroprene rubbers; acryl rubbers such as polybutyl acrylic acid; ethylene-propylene rubbers; and terpolymers of ethylene-propylene-diene (EPDM), and the like, and combinations thereof. The diene rubber is preferred, butadiene rubber is more preferred. The content of rubbery polymer in the graft copolymer resin may be about 5 to about 65% by weight, for example about 10 to about 65% by weight, based on the total weight of the graft copolymer resin (B₁). The average size of the rubber particles can range from about 0.1 to about 4 µm taking into account the desired impact strength and appearance of the resin composition.

Examples of the aromatic vinyl monomer may include, but are not limited to, a styrene monomer such as styrene, α-methyl styrene, β-methyl styrene, p-methyl styrene, p-t-butylstyrene, ethylstyrene, monochlorostyrene, dichlorostyrene, dibromostyrene and the like, and combinations thereof. The styrene is most preferred. The aromatic vinyl monomer may be used in an amount of about 34 to about 94% by weight based on the total weight of the graft copolymer resin (B₁).

One or more kind of monomers copolymerizable with the said aromatic vinyl monomer may be included. Examples of the said monomer may include, but are not limited, the unsaturated nitrile monomer such as acrylonitrile, methacrylonitrile, and the like, and may be used alone or in combination of two or more. The amount of the unsaturated nitrile monomer can be about 1 to about 30% by weight, based on the total weight of the graft copolymer resin (B₁).

The said graft copolymer may be prepared by adding a monomer to impart processability and heat resistance, wherein examples of the monomer may include without limitation acrylic acid, methacrylic acid, maleic anhydride, N-substituted maleimide, and the like, and combinations thereof. The monomer imparting processability and heat resistance may be used in an amount of about 0 to about 15% by weight, based on the total weight of the graft copolymer resin (B₁).

### (B₂) Copolymer Resin

A copolymer resin of the present invention is polymerized at the equivalent rate of the monomer composition in the graft copolymer except for rubbery taking compatibility into account.

Examples of the aromatic vinyl monomer used in the said styrene copolymer resin may include, but are not limited to, styrene, a-methyl styrene, p-methyl styrene, p-t-butyl styrene, ethylstyrene, monochlorostyrene, dichlorostyrene, dibromostyrene, vinyl naphthaleneand the like, and the combinations thereof. Styrene is preferred the most. The aromatic vinyl monomer can be used in an amount of about 60 to about 90% by weight, based on the total weight of the copolymer resin (B₂).

Examples of amonomer copolymerizable with the said aromatic vinyl monomer preferably may include, but are not limited to, unsaturated nitrile compound such as acrylonitrile, methacrylonitrile, and the like, and may be used alone or in combination of two or more. The amount of the copolymerizable monomer with the aromatic vinyl monomer can be about 10 to about 40% by weight, based on the total weight of the copolymer resin (B₂).

Further, for the purpose of imparting processability and heat resistance to the said copolymer resin, the monomers may include without limitation acrylic acid, methacrylic acid, maleic anhydride, N-substituted maleimide and the like, and combinations thereof. The amount of the monomers imparting processability and heat resistance can be about 0 to about 30% by weight, based on the total weight of the copolymer resin (B₂).

### (C) Phosphorous compound

Phosphorous compound have excellent retardancy effect in solid phase reaction, particularly in plastic containing a lot of oxygen.With respect to a thermoplastic resin composition of the present invention, phosphorous compounds are used in combination of two to impart more improving retardancy than in single.The phosphorous compounds (C1), (C2) have a structure represented by following fomulas 2, 3 in order to imparting retardancy of the present invention. The phosphorous compound (C1) is a phosphate based compound and (C2) is a phosphonate based compound. Each of the phosphorous compounds is used in combination to have a synergy effect so that it may provide excellent retardancy and high heat resistance.The above phosphorous compound (C) can be prepared easily by the person skilled in the art.

In an embodiment of the present invention, the (C) phosphorous compound comprises (C1) about 20 to about 80% by weight of phosphate based compound represented by Formula 2 and (C2) about 20 to about 80% by weight of phosphonate based compound represented by Fornula 3, component of each is explained as follows.

### (C1) Phosphate based compound

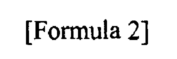

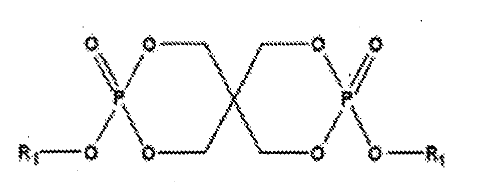

(wherein each of R₁ independently is C₁-C₁₀alkyl, aryl or alkyl-substituted aryl
andaralkyl group.)

The above phosphate based compound (C1) may be used in single or in combination as two more mixture, wherein (C1) is about 20 to about 80% by weight, for example about 30 to about 70% by weight, based on total weight of the phosphorous compound (C). If the amount of the phosphate based compound is less than about 20 % by weight, flame retardancy and heat resistance of the thermoplastic resin composition may be reduced. If the amount of the phosphate based compound is more than about 80 % by weight, physical strengthof the thermoplastic resin composition may be reduced.

### (C2)Phosphonate based compound

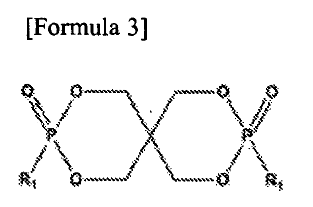

(wherein each of R₁ independently is C₁-C₁₀alkyl, aryl or alkyl-substituted aryl, C₁-C₁₀alkoxy,C₁-C₁₀alkoxy-substituted aryl andaralkyl.)

The phosphate based compound (C2) of the present invention may be used in single or in combination of two more mixtures, wherein the (C2) is about 20 to 80 % by weight, for example about 30 to about 70% by weight, based on total weight of phosphorous compound (C).

The phosphorous compound (C) of the present invention comprises a combination of the (C1) and (C2), the amount of a combination of (C1) and (C2)is about 0.1 to about 40 parts by weight, for example about 1 to about 30 parts by weight, for example about 2 to about 20 parts by weight, based on 100 parts by weight of base resin. If the amount of the phosphorous compound (C) is less than about 0.1 parts by weight, sufficient flame retardancy cannot be obtained. If the amount of the phosphorous compound (C) is more than about 40 parts by weight, machinery properties such as impact strength may be reduced.

In an embodiment of the present invention, the polycarbonate resin composition may include additives as use of each. Examples of such additives further include without limitation a plasticizer, flame retardant aid, anti-dripping agent, heat stabilizer, parting agent, weather stabilizer, halogen stabilizer, lubricant, inorganic filler, coupling agent, light stabilizer, antioxidants, dye, pigment, antistatic, releasing agent, dispersant, weather stabilizer, inorganic fiber or a combination thereof. The inorganic filler is such as talc, silica, mica, glass fiber, ceramics or sulfate. The additive may be less than about 30 parts by weight, for example about 0.1 to about 30 parts by weight, based on 100 parts by weight of a base resin.

The polycarbonate resin composition according to the present invention can be prepared by a conventional method. For example, all the components and additives are mixed together and extruded through an extruder and are prepared in the form of pellets or chips.

The polycarbonate resin composition of the present invention can be applied to housing of electric or electronic goods such as TV, audio, cellular phone, digital camera, navigation, washing, computer, monitor, MP3, video player, CD player and cleanser and large-sized molding product because of having excellent flame retardancy and heat resistance.

Method for preparing the plastic molding article using a polycarbonate resin compound in accordance with the present invention is not limited, and methods such as extrusion, injection molding or casting may be employed. The methods in the above may be easily conducted by those skilled in the art.

The invention may be better understood by reference to the following examples which are intended for the purpose of illustration and are not to be construed as in any way limiting the scope of the present invention, which is defined in the claims appended hereto.

### Example

The following components were used:
(A) Polycarbonate resin
   Bisphenol-A type Polycarbonate resin made by Teijin company of Japan (product name:PANLITE L-1250W) with a weight average molecular weight (M_{w}) of about 25,000 g/molis used.
(B) Rubber-modified aromatic vinyl resin
   Rubber-reinforcedstyrenic resin made by Cheil Industries, Inc. of South Korea (product name: CHT)is used.
(C) Phosphorous compound
(C1) Phosphate based compound
(C1-a) Phosphate was used, whereinR₁is phenyl.
(C1-b) Phosphate was used, wherein R₁ is benzyl
(C2) Phosphonate
(C2-a) Phosphonate was used, wherein R₁ is phenyl.
(C2-b) Phosphonate was used, wherein R₁ is benzyl.
(C2-c) Phosphonate was used,R₁ ispara-methoxyphenyl.

### Examples 1∼12 andComparative Examples 1∼10

The components in amounts shown in the following Table 1, 2 are extruded through a conventional extruder at 200∼280C° to prepare pellets.After the prepared pellets are dried at 80C° for 2 hours, the pellets are injected by 10 oz extruder under conditions of a molding temperature of 180∼280 C° and a tool temperature of 40∼80 C°. Then, samples are prepared.

### Measurement of Physical Properties:

(1) Flame retardancy: The flame retardancyis measured according to UL 94 VB with a thickness of 1/8".
(2) Total burning time:When the flame retardancy is measured, total burning time is sum of first and second burning time about 5 specimens.
(3) Heat resistance: VST(Vicat Softening Temperature) is measuredby 5 kg pendulum according to ISO R 306.
(4) IZOD impact strength: Impact strength is measured according to ASTM D-256 with a thickness of 1/8".(kgf cm/cm).

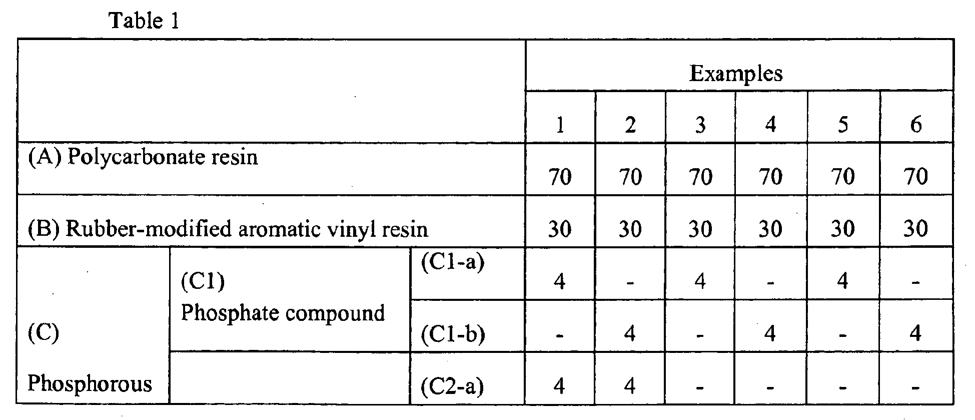

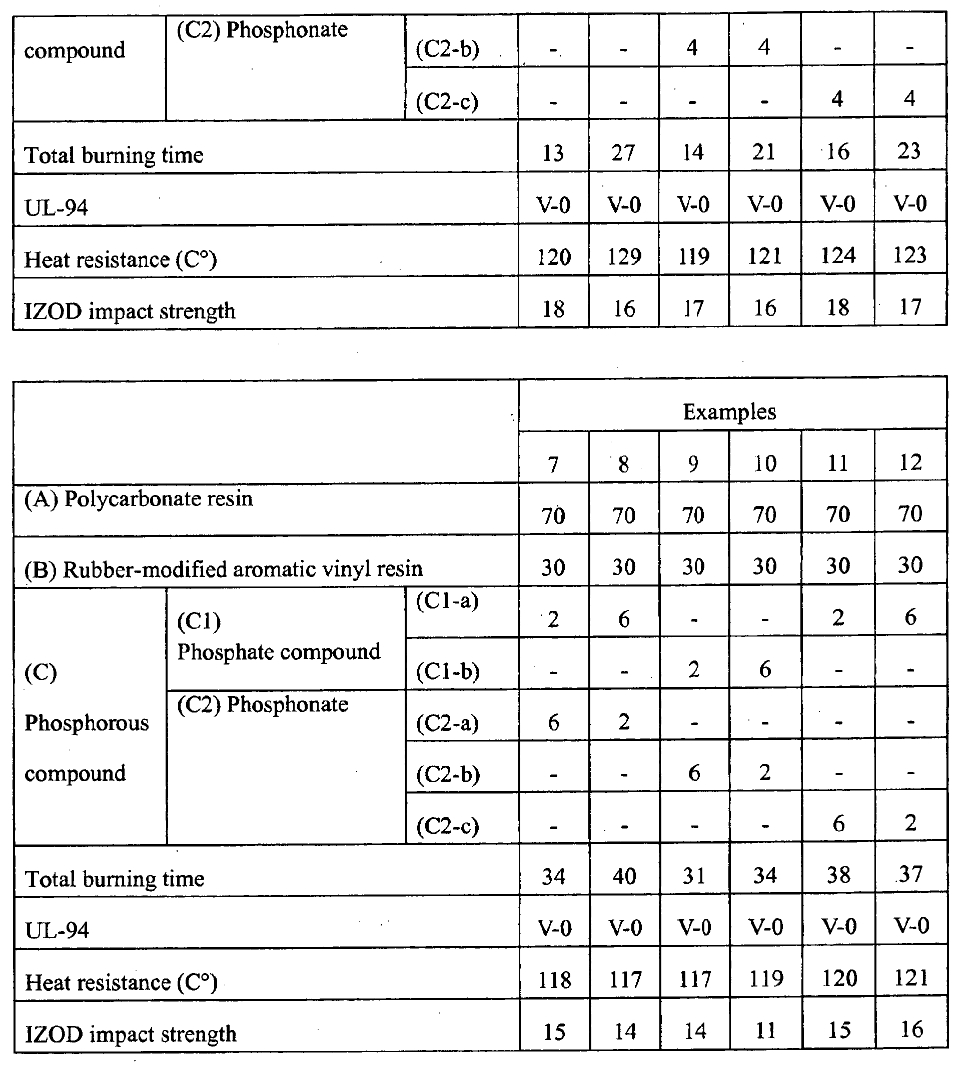

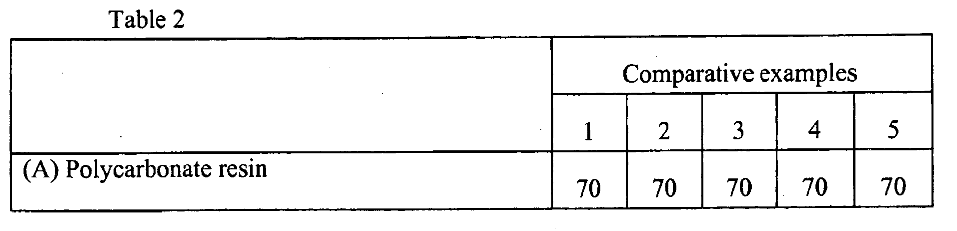

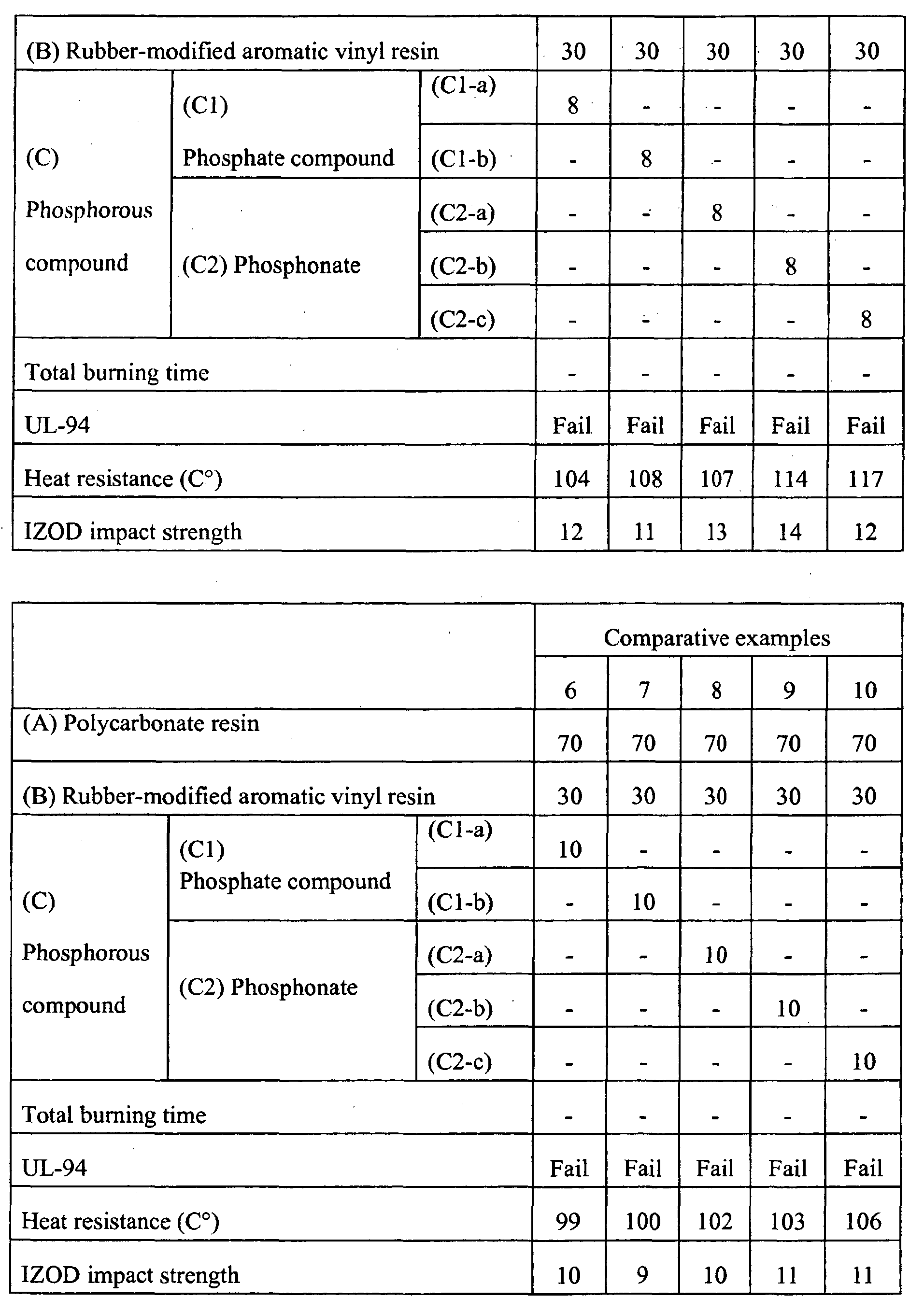

As shown in Table 1 and 2, Examples 1 to 12 using a combination of phosphate based resin (C1) and phosphonate based resin (C2) of phosphorous compound havemore excellent flame retardancy(1/8"), impact strength and heat resistance than Comparative Examples 1 to 10 using a single of phosphate based resin (C1) or phosphonate based resin (C2).

## Claims

1. A polycarbonate resin composition having excellent flame retardancy comprising:
(A) 30 to 99 % by weight of a polycarbonate resin; and
(B) 1 to 70 % by weight of a rubber-modified aromatic vinyl resin;
(C) 0.1 to 40 parts by weight of a phosphorous compound including (C1) a phosphate compound represented by the formula 2 and (C2) a phosphonate compound represented by formula 3, per 100 parts by weight of a base resin including (A) and (B): 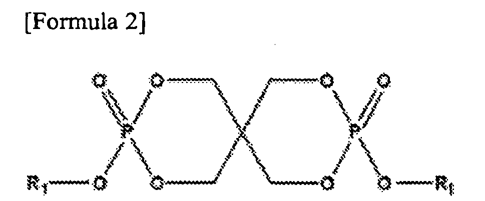 Wherein R₁ is respectively C₁-C₁₀alkyl, aryl or aryl substituted with alkyl, aralkyl. 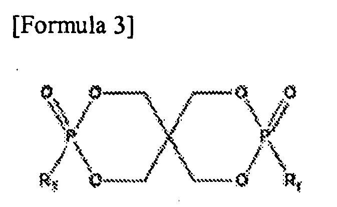 Wherein R₁ is respectively C₁-C₁₀alkyl, aryl or aryl substituted with alkyl, C₁-C₁₀alkoxy, aryl substituted with C₁-C₁₀ alkoxy, or aralkyl.

2. The polycarbonate resin composition having excellent flame retardancy of claim 1, wherein the rubber-modified aromatic vinyl resin (B) comprises (B₁) 10 to 100 % by weight of a graft copolymer resin which is prepared by graft-copolymerazing 5 to 65 % by weight of a rubbery polymer, 34 to 94% by weight of an aromatic vinyl monomer, 1 to 30 % by weight of a monomer copolymerizable with said aromatic vinyl monomer, and 0 to 15 % by weight of a monomer being capable of applying machinability and heat resistance; and (B₂) 0 to 90 % by weight of a copolymer resin which is prepared by copolymerizing 60 to 90 % by weight of a aromatic vinyl monomer, 10 to 40 % by weight of a monomercopolymerizable with said aromatic vinyl monomer, and 0 to 30 % by weight of a monomer being capable of applying machinability and heat resistance.

3. The polycarbonate resin composition having excellent flame retardancy of claim 2, wherein said aromatic vinyl monomeris one or more selected from the group consisting of styrene, α-methylstyrene, β-methylstyrene, p-methylstyrene, para t-buthylstyrene, ethylstyrene, monochlorostyrene, dichlorostyrene, dibromostyrene and a combination thereof

4. The polycarbonate resin composition having excellent flame retardancy of claim 2, wherein said monomer copolymerizable with said aromatic vinyl monomer is unsaturated nitrile-containing compound.

5. The polycarbonate resin composition having excellent flame retardancy of claim 2, wherein said monomer being capable of applying machinability and heat resistance is one or more selected from the group consisting of acrylic acid, methacrylic acid, maleic anhydride, N-substitutedmaleimide and a combination thereof.

6. The polycarbonate resin composition having excellent flame retardancy of any of claims 1 to 5, wherein said phosphorous compound (C) comprises (C1) 20 to 80 % by weight of a phosphate compound represented by the formula 2 and (C2) 20 to 80 % by weight of a phosphonate compound represented by formula 3.

7. The polycarbonate resin composition having excellent flame retardancy of any of claims 1 to 6, wherein said resin composition further comprises one or more selected from the group consisting of a flame retardant, a flame retarding aid,a plasticizer, heat stabilizer, an anti-dripping agent, antioxidant, light stabilizer, dye, pigment, inorganic filler, or a combination thereof

8. A plastic article obtainable by the resin composition of any one of claims 1 to 7.

## Patentansprüche

1. Polycarbonatharzzusammensetzung mit ausgezeichneter Flammhemmung, umfassend:
(A) 30 bis 99 Gew.-% eines Polycarbonatharzes; und
(B) 1 bis 70 Gew.-% eines kautschukmodifizierten aromatischen Vinylharzes;
(C) 0,1 bis 40 Gewichtsteile einer Phosphorverbindung, einschließend (C1) eine Phosphatverbindung der Formel 2 und (C2) eine Phosphatverbindung der Formel 3 pro 100 Gewichtsteile eines (A) und (B) einschließenden Basisharzes: 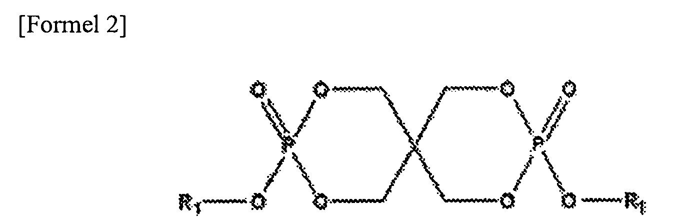 wobei R₁ jeweils C₁-C₁₀-Alkyl, Aryl oder mit Alkyl, substituiertes Aryl, Aralkyl ist; 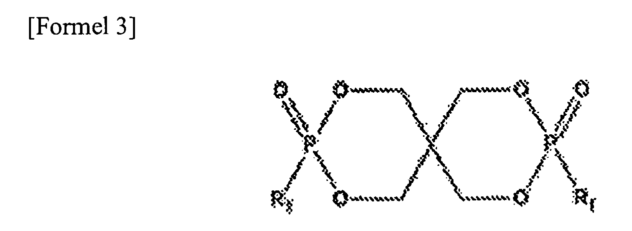 wobei R₁ jeweils C₁-C₁₀-Alkyl, Aryl oder mit Alkyl substituiertes Aryl, C₁-C₁₀-Alkoxy, mit C₁-C₁₀-Alkoxy substituiertes Aryl oder Aralkyl ist.

2. Polycarbonatharzzusammensetzung mit ausgezeichneter Flammhemmung nach Anspruch 1, wobei das kautschukmodifizierte aromatische Vinylharz (B) (B₁) 10 bis 100 Gew.-% eines Pfropfcopolymerharzes umfasst, das durch Pfropfcopolymerisieren von 5 bis 65 Gew.-% eines Kautschukpolymers, 34 bis 94 Gew.-% eines aromatischen Vinylmonomers, 1 bis 30 Gew.-% eines mit dem aromatischen Vinylmonomer copolymersierbaren Monomers und 0 bis 15 Gew.-% eines Monomers, das zum Verleihen von Verarbeitungsfähigkeit und Wärmebeständigkeit in der Lage ist, hergestellt wird; und (B₂) 0 bis 90 Gew.-% eines Copolymerharzes, das durch Copolymerisieren von 60 bis 90 Gew.-% eines aromatischen Vinylmonomers, 10 bis 40 Gew.-% eines mit dem aromatischen Vinylmonomer copolymerisierbaren Monomers und 0 bis 30 Gew.-% eines Monomers, das zum Verleihen von Verarbeitungsfähigkeit und Wärmebeständigkeit in der Lage ist, hergestellt wird, umfasst.

3. Polycarbonatharzzusammensetzung mit ausgezeichneter Flammhemmung nach Anspruch 2, wobei das aromatische Vinylmonomer eines ist, das ausgewählt ist aus der Gruppe, bestehend aus Styrol, α-Methylstyrol, β-Methylstyrol, p-Methylstyrol, para-t-Butylstyrl, Ethylstyrol, Monochlorstyrol, Dichlostyrol, Dibromstyrol und einer Kombination davon.

4. Polycarbonatharzzusammensetzung mit ausgezeichneter Flammhemmung nach Anspruch 2, wobei das mit dem aromatischen Vinylmonomer copolymerisierbare Monomer eine ungesättigte nitrilhaltige Verbindung ist.

5. Polycarbonatharzzusammensetzung mit ausgezeichneter Flammhemmung nach Anspruch 2, wobei das Monomer, das zum Verleihen von Verarbeitungsfähigkeit und Wärmebeständigkeit in der Lage ist, eines oder mehrere ist, das/die ausgewählt ist/sind aus der Gruppe, bestehend aus Acrylsäure, Methacrylsäure, Maleinsäureanhydrid, N-substituiertem Maleinsäureanhydrid und einer Kombination davon.

6. Polycarbonatharzzusammensetzung mit ausgezeichneter Flammhemmung nach einem der Ansprüche 1 bis 5, wobei die Phosphorverbindung (C) (C1) 20 bis 80 Gew.-% einer Phosphatverbindung der Formel 2 und (C2) 20 bis 80 Gew.-% einer Phosphatverbindung der Formel 3 umfasst.

7. Polycarbonatharzzusammensetzung mit ausgezeichneter Flammhemmung nach einem der Ansprüche 1 bis 6, wobei die Harzzusammensetzung des Weiteren eines oder mehrere umfasst, das/die ausgewählt ist/sind aus der Gruppe, bestehend aus einem Flammhemmer, einer Flammhemmerhilfe, einem Weichmacher, einem Wärmestabilisator, einem Tropfhemmer, einem Antioxidationsmittel, einem Lichtstabilisator, einem Farbstoff, einem Pigment, einem anorganischen Füllstoff oder einer Kombination davon.

8. Kunststoffgegenstand, der durch die Harzzusammensetzung nach einem der Ansprüche 1 bis 7 erhältlich ist.

## Revendications

1. Composition de résine polycarbonate dotée d'une excellente capacité d'ignifugation, comprenant :
A) de 30 à 99 % en poids d'une résine polycarbonate ;
B) de 1 à 70 % en poids d'une résine de vinyl-aromatique modifiée par un caoutchouc ;
C) et de 0,1 à 40 parties en poids, pour 100 parties en poids de résine de base constituée des composants (A) et (B), d'un composé du phosphore incluant
C1) un composé de type phosphate représenté par la formule 2,
C2) et un composé de type phosphonate représenté par la formule 3 : 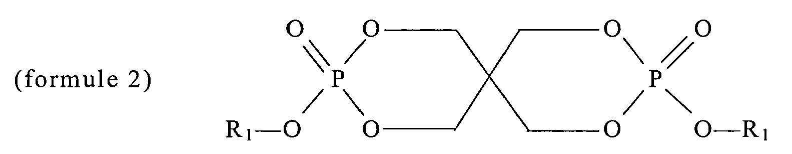 dans laquelle chaque symbole R₁ représente un groupe alkyle en C₁-C₁₀, aryle ou aryle à substituant(s) alkyle, ou aralkyle ; 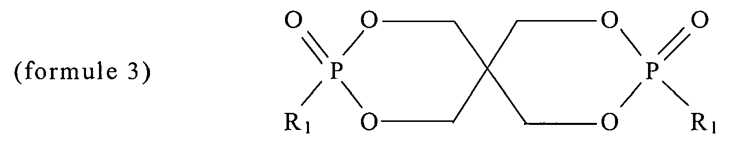 dans laquelle chaque symbole R₁ représente un groupe alkyle en C₁-C₁₀, aryle ou aryle à substituant(s) alkyle, alcoxy en C₁-C₁₀, aryle à substituant(s) alcoxy en C₁-C₁₀, ou aralkyle.

2. Composition de résine polycarbonate dotée d'une excellente capacité d'ignifugation, conforme à la revendication 1, dans laquelle la résine (B) de vinyl-aromatique modifiée par un caoutchouc comprend :
B₁) de 10 à 100 % en poids d'une résine copolymère de greffage, préparée par copolymérisation-greffage d'environ 5 à 65 % en poids d'un polymère de type caoutchouc, de 34 à 94 % en poids d'un monomère vinyl-aromatique, de 1 à 30 % en poids d'un monomère copolymérisable avec ledit monomère vinyl-aromatique, et de 0 à 15 % en poids d'un monomère capable d'apporter aptitude à la mise en oeuvre et résistance à la chaleur ;
B₂) et de 0 à 90 % en poids d'une résine copolymère préparée par copolymérisation de 60 à 90 % en poids d'un monomère vinyl-aromatique, de 10 à 40 % en poids d'un monomère copolymérisable avec ledit monomère vinyl-aromatique, et de 0 à 30 % en poids d'un monomère capable d'apporter aptitude à la mise en oeuvre et résistance à la chaleur.

3. Composition de résine polycarbonate dotée d'une excellente capacité d'ignifugation, conforme à la revendication 2, dans laquelle ledit monomère vinyl-aromatique est choisi, au nombre d'un ou plus, dans l'ensemble constitué par les styrène, α-méthyl-styrène, β-méthyl-styrène, para-méthyl-styrène, para-tertiobutyl-styrène, éthyl-styrène, monochloro-styrène, dichloro-styrène, dibromo-styrène, et une combinaison de ces monomères.

4. Composition de résine polycarbonate dotée d'une excellente capacité d'ignifugation, conforme à la revendication 2, dans laquelle ledit monomère copolymérisable avec ledit monomère vinyl-aromatique est un composé de type nitrile insaturé.

5. Composition de résine polycarbonate dotée d'une excellente capacité d'ignifugation, conforme à la revendication 2, dans laquelle ledit monomère capable d'apporter aptitude à la mise en oeuvre et résistance à la chaleur est choisi, au nombre d'un ou plus, dans l'ensemble constitué par l'acide acrylique, l'acide méthacrylique, l'anhydride maléique, un maléimide dont l'atome d'azote porte un substituant, et une combinaison de ces monomères.

6. Composition de résine polycarbonate dotée d'une excellente capacité d'ignifugation, conforme à l'une des revendications 1 à 5, dans laquelle ledit composé du phosphore (C) comprend :
C1) de 20 à 80 % en poids d'un composé de type phosphate représenté par la formule 2,
C2) et de 20 à 80 % en poids d'un composé de type phosphonate représenté par la formule 3.

7. Composition de résine polycarbonate dotée d'une excellente capacité d'ignifugation, conforme à l'une des revendications 1 à 6, laquelle composition de résine comprend en outre des adjuvants choisis dans l'ensemble formé par les agents ignifugeants, auxiliaires d'ignifugation, plastifiants, thermostabilisants, agents anti-égouttage, antioxydants, photostabilisants, colorants, pigments et charges inorganiques, ainsi que les combinaisons de tels adjuvants.

8. Pièce de matière plastique, accessible à partir d'une composition de résine conforme à l'une des revendications 1 à 7.
